# EUROPÄISCHE PATENTSCHRIFT

(11) **EP 1 496 167 B1**
(45) Veröffentlichungstag und Bekanntmachung des Hinweises auf die Patenterteilung: **18.07.2007**
(21) Anmeldenummer: 04013540.2
(22) Anmeldetag: 09.06.2004
(51) Int. Cl.: E04B 1/80, E04F 13/08

(54) **Verfahren zur Befestigung von Hochleistungswärmedämmplatten sowie Wärmedämmung aus diesen Platten**
Method for mounting high efficiency heat insulation panels and heat insulation made from such panels
Méthode de fixation de panneaux d'isolation thermique à haute efficacité et isolation thermique faite de ces panneaux

(30) Priorität: 13.06.2003 AT 9282003
(43) Veröffentlichungstag der Anmeldung: 12.01.2005
(73) Patentinhaber: Wangler, Norbert, 4880 St.Georgen im Attergau 201 (AT); Ferle, Anton, 5311 Loibichl (AT); Essl, Otmar, 5400 Hallein (AT)
(72) Erfinder: Wangler, Norbert, 4880 St.Georgen im Attergau 201 (AT); Ferle, Anton, 5311 Loibichl (AT); Essl, Otmar, 5400 Hallein (AT)
(74) Vertreter: Grabherr, Claudia

(56) Entgegenhaltungen:
- EP-A- 0 581 664
- DE-A- 3 519 752
- DE-C- 10 204 352
- FR-A- 2 580 705

## Beschreibung

Die Erfindung betrifft ein Verfahren zur mechanischen Befestigung von Hochleistungswärmedämmplatten, insbesondere Vakuumisolationspaneele (VIP), an einer Bauteiloberfläche mit Hilfe von Dübeln, sowie eine Wärmedämmung aus Hochleistungswärmedämmplatten, insbesondere Vakuumisolationspaneelen, für Bauteiloberflächen. Durch das erfindungsgemäße Verfahren und bei der erfindungsgemäßen Wärmedämmung soll ohne mechanische Gefährdung der Paneele ein mehrschichtiger Aufbau gewährleistet und dabei sowohl die überdurchschnittlichen Wärmedämmwerte des Baustoffes als auch die Möglichkeit eines stabilen, kraftschlüssigen Anbaues einer Außenfassade an die Bauteiloberfläche realisiert werden.

Vakuumdämmungen weisen folgende grundsätzliche Vorteile im Baubereich auf:
- geringes Gewicht
- hoher Wärmedämmwert (bis zu Faktor 10 gegenüber konventionellen Dämmstoffen)
- geringe Aufbaudicke
- Abschirmung von elektromagnetischen Strahlen
- Auch im Beschädigungsfall (belüftetes VIP) wird immer noch ein doppelt so hoher Dämmwert als mit herkömmlichen Dämmstoffen erreicht.

Nachteilig bei Vakuumdämmungen ist jedoch, dass sie bauartbedingt sensibel auf mechanische Einwirkungen sind.

Gemäß derzeitigem Stand der Technik ist es noch nicht gelungen Vakuumisolationspaneele (VIP) zweilagig stoßversetzt mechanisch an Bauteiloberflächen (z.B. Blockholztafel, Mauerwerk aus Beton, Ziegel, etc.) zu befestigen. Diese werden ausnahmslos geklebt, bzw. bei horizontalem Einbau, lose verlegt. Ein solches Verfahren wird in DE-10204352-C beschrieben.

Als Gründe dafür werden angeführt:
1. Die bisher bei einer mechanischen Befestigung aufgetretenen Wärmebrücken im Zwischenraum des Plattenstoßes machten den Bauart bedingten Vorteil des Hochleistungswärmedämmstoffes wieder zunichte.
2. Die Oberfläche der Vakuumwärmedämmplatten darf nicht beschädigt, bzw. durchbohrt werden, weil dadurch das innen liegende Dämmmaterial durchlüftet wird, und der Dämmwert deutlich schlechter wird.
3. Weiters kann keine Fassadenhaut angebracht (aufgeklebt) werden, weil die Scherkräfte am Folienverbund der VIP zur Zerstörung des Hüllmaterials und damit der Paneele führen würde.

Bisher bekannte mechanische Befestigungsmethoden von VIP's sind allesamt Stoß auf Stoß konzipiert, weil angenommen wird, dass beim Verlegen der Wärmedämmplatten mit Fugen von bis zu 1 cm zwischen den einzelnen VIP's die gesamte Konstruktion (mittlerer Wärmedurchgangswert) darunter leidet. Diese konventionelle "Referenzbauweise" bringt jedoch den Nachteil mit sich, dass keine kraftschlüssige Verbindung (Verschraubung) von der Fassadenschalung hin zur Bauteiloberfläche zustande kommen kann.

Das erfindungsgemäße Verfahren zur Befestigung von Hochleistungswärmedämmplatten, insbesondere Vakuumisolationspaneelen an einer Bauteiloberfläche mit Hilfe von Dübeln, ist dadurch gekennzeichnet, dass eine Schicht Hochleistungswärmedämmplatten durch Fugen voneinander beabstandet auf der Bauteiloberfläche aufgebracht werden, wobei die Fugen breiter sind als der Durchmesser des Schaftes der Dübeln, dass die Fugen luftdicht verschlossen werden und dass Befestigungsmittel die Schicht aus Hochleistungswärmedämmplatten im Bereich der Fugen durchsetzen und in die, in die Bauteiloberfläche eingebrachten Dübeln eingreifen.

Bei einer bevorzugten Ausführung der Erfindung wird nach dem Aufbringen der ersten Schicht Hochleistungswärmedämmplatten und dem luftdicht Verschließen der Fugen eine zweite Schicht Hochleistungswärmedämmplatten durch Fugen voneinander beabstandet auf die erste Schicht Hochleistungswärmedämmplatten aufgebracht, wobei die Fugen der zweiten Schicht gegenüber den Fugen der ersten Schicht versetzt angeordnet werden, und ebenfalls breiter sind als der Durchmesser des Schaftes der Dübeln, und die Fugen der zweiten Schicht werden ebenfalls verschlossen, und an Kreuzungspunkten der Fugen der ersten Schicht mit den Fugen der zweiten Schicht durchsetzen die Befestigungsmittel die Schichten aus Hochleistungswärmedämmplatten, welche in die, in die Bauoberfläche eingebrachten Dübeln eingreifen.

Die erfindungsgemäße Wärmedämmung aus Hochleistungswärmedämmplatten, insbesondere Vakuumisolationspaneelen, für Bauteiloberflächen, ist dadurch gekennzeichnet, dass die Wärmedämmung aus einer Schicht Hochleistungswärmedämmplatten besteht, die durch verschlossene Fugen voneinander beabstandet sind und dass Befestigungsmittel die Schicht aus Hochleistungswärmedämmplatten im Bereich der Fugen durchsetzen und in, in die Bauteiloberfläche eingebrachte Dübeln eingreifen, deren Schaftdurchmesser geringer ist als die Fugenbreite.

Vorzugsweise besteht die Wärmedämmung aus mindestens zwei Schichten Hochleistungswärmedämmplatten, wobei die Hochleistungswärmedämmplatten in jeder Schicht durch verschlossene Fugen voneinander beabstandet und die Fugen der zweiten Schicht gegenüber den Fugen der ersten Schicht versetzt angeordnet sind, und an Kreuzungspunkten der Fugen der ersten Schicht mit den Fugen der zweiten Schicht durchsetzen die Befestigungsmittel die Schichten aus Hochleistungswärmedämmplatten und greifen in die, in die Bauteiloberfläche eingebrachte Dübeln ein, deren Schaftdurchmesser geringer ist als die Fugenbreite.

Vorteilhafterweise wird unter oder über einer Schicht aus Hochleistungsdämmplatten eine Schicht konventionellen Dämmstoffs vorgesehen.

Vorzugsweise sind die Hochleistungswärmedämmplatten der ersten und/oder der zweiten Schicht provisorisch aufgeklebt, bis sie durch die Verbindung der Befestigungsmittel mit den Dübeln gehalten werden.

Die Fugen können zumindest teilweise durch Klebeband verschlossen werden und/oder zumindest teilweise mit wärmedämmendem Material ausgefüllt oder abgedichtet sein.

Gemäß einer bevorzugten Ausführungsform der Erfindung werden die Dübeln nach Aufbringen der ersten Schicht von Hochleistungswärmedämmplatten in die Bauteiloberfläche eingebracht und stützen sich mit vorzugsweise tellerförmigen Erweiterungen an ihren äußeren Enden an den Außenflächen der Hochleistungswärmedämmplatten der ersten Schicht ab.

Nach Aufbringen der zweiten Schicht von Hochleistungswärmedämmplatten werden vorteilhafterweise die Befestigungsmittel mit vorzugsweise tellerförmigen Erweiterungen an ihren äußeren Enden in die Dübeln eingebracht, wobei sich die Erweiterungen an den Außenflächen der Hochleistungswärmedämmplatten der zweiten Schicht abstützen.

Ferner können in den Befestigungsmitteln Haltevorrichtungen verankert werden, die eine weitere Schicht Hochleistungswärmedämmplatten oder Fassadenelemente halten.

Die Erfindung bringt neben den Vorteilen der Hochleistungswärmedämmplatten als Dämmmittel folgende Vorteile:
1.) Die Bauteile sind wegen der mechanischen Befestigung (Fehlen einer kraftschlüssigen Verklebung) im Schadens bzw. Gewährleistungsfall jederzeit auswechselbar, ohne die Gesamtkonstruktion nachhaltig zu schädigen.
2.) Aus oben angeführtem Konstruktionsvorteil lässt sich der Aufbau problemlos nach Lebensdauer sortenrein trennen und recyceln.
3.) Durch das Abkleben der Fugen wird der konvektive Wärmetransport auf ein Minimum in der Fuge zwischen zwei Dämmplatten reduziert. Dies hat zur Folge, dass der mittlere U-Wert (Wärmedurchgangswert) nur geringfügig gegenüber einer kraftschlüssig verklebten Referenz-Dämmungsebene verschlechtert wird.
4.) Bei geringer Scherfestigkeit bei Hochleistungswärmedämmplatten, wie z.B. Vakuumisolationspaneelen, ist es nicht möglich lastableitende Fassadenkonstruktionen zu befestigen. Erst durch die mechanische Befestigung (Dübelsystem) und der damit einhergehenden kraftschlüssigen Verbindung mit der Tragkonstruktion des Bauteils (Holz, Mauerwerk, etc.) können beliebige Fassaden (Putz, Metall, Holz, etc.) aufgebracht werden. Erst dieser Umstand macht z.B. die VIP-Konstruktion für Anwendungen im Hochbau und Tiefbau interessant.
5.) Durch die spezielle Ausgestaltung des Dübels wird die Verletzungsgefahr der Hochleistungswärmedämmplatten auf ein Minimum reduziert. Die großen Dübelteller sorgen für entsprechenden Halt der Dämmung am Bauwerk, und gewährleisten, dass bei unsachgemäßer Verwendung des Bolzens die Oberfläche der Hochleistungswärmedämmplatten nicht sofort beschädigt wird.
6.) Ein weiterer Vorteil besteht in der Möglichkeit, die zwei Lagen Hochleistungswärmedämmplatten zuerst auf der Innenseite der Fassade (Holzpaneel, Eternitplatte, Metall, etc. ) im Werk aufzubringen und so vorgefertigt auf die Baustelle anzuliefern. In der Folge wird der Aufbau mit der Tragkonstruktion verschraubt (Vorteil Dübelsystem). Eine Beschädigung der Hochleistungswärmedämmplatten auf der Baustelle kann somit weitgehend verhindert werden.
7.) Auch im Bauwerk-Sanierungsfall kann oben angeführte Methode Verwendung finden.
8.) Die bisher bei hohen Dämmstärken üblichen tiefen Fensterleibungen (bis zu 40 cm) und dadurch bedingten verringerten Lichteinfall und Sonneneinstrahlung werden vermieden.

Wie im folgenden aufgezeigt werden kann, sind die eingangs gemäss dem Stand der Technik unterstellten resultierenden Nachteile von Trennfugen bislang krass überbewertet. Durch spezielle erfindungsgemäße Anordnung der einzelnen Hochleistungswärmedämmplatten wird der bauphysikalische Nachweis erbracht, dass unter Einbeziehung und Schaffung von stehenden Luftschichten im Plattenzwischenraum (abgeklebte Luftzwischenräume) die mittleren Wärmedurchgangswerte nur unwesentlich schlechter sind, als bei einer herkömmlichen Konstruktion mit all den sich daraus ergebenden Nachteilen in der Baupraxis.

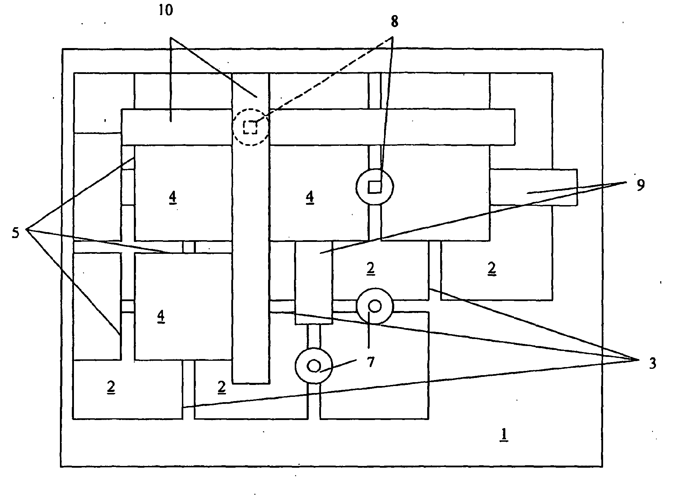

Das erfindungsgemäße Befestigungssystem ist beispielsweise folgendermaßen aufgebaut, wobei auf die beiliegende Zeichnung bezug genommen wird, in der der erfindungsgemäße Aufbau schematisch dargestellt ist.

Auf einer Bauteiloberfläche 1 ist eine Lage VIP 2 aufgebracht, wobei zwischen den Paneelen Fugen 3 von ca. 1 cm freigehalten sind. Eine zweite Lage VIP 4 ist fugenversetzt mit ebensolchen Fugen 5 auf die erste Lage VIP 2 aufgebracht.
Die Fugen 3, 5 der einzelnen VIP - Lagen werden jeweils mit geeigneten Baumaterialien geschlossen (z.B. mit einem Klebeband 9, 10 abgeklebt, verfüllt).

Im montagebedingten Durchdringungspunkt, d.h. den Kreuzungspunkten der Fugen 3 der ersten Lage VIP 2 mit den Fugen 5 der zweiten Lage VIP 4, wird der Aufbau mittels - vorzugsweise mehrteiligem - Dübelsystem 7, 8 ohne mechanische Zerstörung der Paneele 2, 4 kraftschlüssig mit der Bauteiloberfläche 1 verbunden, wobei zugleich bzw. in der Folge ein Befestigungssystem für die abschließende Außenfassade ebenso kraftschlüssig mit der Bauteiloberfläche 1 mitbefestigt werden kann.

Beim erfindungsgemäßen Verfahren zur Befestigung der Vakuumisolationspaneele wird wie folgt vorgegangen:

Auf die Bauteiloberfläche 1 (z.B. eine Blockholztafel mit innen liegender Holzweichfaserdämmung) wird eine vorübergehende Montagebefestigung der Vakuumisolationspaneele 2 aufgebracht.

Die erste Lage Vakuumisolationspaneele 2 wird jeweils mit einer Fuge 3 von vorzugsweise 8 mm zwischen den Vakuumisolationspaneelen 2 auf der Bauteiloberfläche 1 verlegt. Die erste Lage wird dabei entweder mit Doppelklebeband im Achsmaß der VIP als Montagehilfe befestigt oder mit einem dafür vorgesehenen Teil 7 eines mehrteiligen Dübelsystems befestigt.

Der 8 mm Luftspalt in den Fugen 3 der ersten Lage wird in der Folge vorzugsweise luftdicht, z.B. mit Döppelklebeband 9, verschlossen.

Die zweite Lage Vakuumisolationspaneele 4 wird nunmehr ebenso mit einer Fuge 5 von 8 mm zwischen den Vakuumisolationspaneelen 4 fugenversetzt aufgebracht. Und zwar in der Form, dass immer an den Mittelpunkten der vier Seiten der - im dargestelltem Fall 50 x 50 cm großen Vakuumisolationspaneele 2, 4 ein montagebedingter Durchdringungspunkt der ersten und der zweiten Lage der Vakuumisolationspaneele 2, 4 bis zur Bauteiloberfläche 1 entsteht. Zusätzlich zur Montagehilfe werden die VIP 4 mit Hilfe eines weiteren Teils des Dübelsystems dem Befestigungsmittel 8 am Bauteil fixiert.

Die Fuge 5 der zweiten Lage VIP 4 wird ebenfalls zur Erzeugung von stehenden Luftschichten mit Klebeband 10 verklebt.

Gegebenfalls können weitere Lagen wie oben angeführt aufgebracht werden.

Eine kraftschlüssige Verbindung mit der Bauteiloberfläche 1 wird nun durch das Dübelsystem 7, 8, z.B. durch Verschraubung, Bolzen, Haken o.ä., hergestellt, wobei eine Halteeinrichtung für die Fassadenbefestigung, beispielhaft ein Schienensystem, ebenso kraftschlüssig an der bzw. mittels dieser Verbindung befestigt wird. Die Vakuumisolationspaneele 2, 4 werden dadurch gleichmäßig auf Druck belastet und am Bauteil gehalten. Die Lastableitung des Aufbaues und der Fassade erfolgt damit ausschließlich über diese Verbindung (Verschraubung).

Grundsätzlich möglich ist auch das Verschließen sämtlicher Luftzwischenräume mit Dämm- bzw. Dichtmaterial jeglicher Bauart mit dem Vorteil, geringfügig noch bessere mittlere Dämmwerte zu erreichen.

Die folgende Aufstellung zeigt eine Gegenüberstellung der Lambda- und der mittleren U-Werte für verschiedene Aufbauten mit mechanisch befestigten oder verklebten Vakuumisolationspaneelen (VIP) mit verschiedenen Luftzwischenräumen (LZR) und mit stehenden bzw. nicht stehenden Luftschichten:

Berechnung an einem Flächenstück 125/125 cm

| **Variante Nr.** | **Lambda [W/K]** | **mittl. U- Wert** |
|---|---|---|
| VIPa1-01 | 0.07532 | 0,1928 |
| VIPa1-02 | 0,05469 | 0,1400 |
| VIPa1-03 | 0,05333 | 0,1365 |
| VIPa1-04 | 0,04180 | 0,1070 |
| VIPa1-05 | 0,04139 | 0,1060 |
| VIPa1-06 | 0,04039 | 0,1034 |
| VIPb1-01 | 0,08871 | 0,2271 |
| VIPb1-02 | 0,05805 | 0,1486 |
| VIPb1-03 | 0,05565 | 0,1425 |
| VIPb1-04 | 0,0550 | 0,1408 |
| VIPb1-05 | 0,05274 | 0,1350 |
| VIPb1-06 | 0,04432 | 0,1135 |
| VIPb1-07 | 0,04227 | 0,1082 |

Variante VIPa1-01: geklebt
   Blockholztafel mit zwei Lagen VIP und jeweils 2mm Luftzwischenraum (LZR) in der Stoßfuge. VIP geklebt
   LZR- innen Außenluft, LZR- außen Außenluft
   Lambda VIP 0,008 W/K keine zusätzliche Dämmung in der Blockholztafel
Variante VIPa1-02: geklebt
   Blockholztafel mit zwei Lagen VIP und jeweils 2mm Luftzwischenraum (LZR) in der Stoßfuge. VIP geklebt
   LZR- innen stehende Luftschicht, LZR- außen Außenluft
   Lambda VIP 0,008 W/K keine zusätzliche Dämmung in der Blockholztafel
Variante VIPa1-03: geklebt
   Blockholztafel mit zwei Lagen VIP und jeweils 2mm Luftzwischenraum (LZR) in der Stoßfuge. VIP geklebt
   LZR- innen stehende Luftschicht, LZR- außen stehende Luftschicht
   Lambda VIP 0,008 W/K keine zusätzliche Dämmung in der Blockholztafel
Variante VIPa1-04: geklebt
   Blockholztafel mit zwei Lagen VIP und jeweils 2mm Luftzwischenraum (LZR) in der Stoßfuge. VIP geklebt
   LZR- innen stehende Luftschicht, LZR- außen stehende Luftschicht
   Lambda VIP 0,006 W/K keine zusätzliche Dämmung in der Blockholztafel
Variante VIPa1-05: geklebt
   Blockholztafel mit zwei Lagen VIP und jeweils 2mm Luftzwischenraum (LZR) in der Stoßfuge. VIP geklebt
   LZR- innen stehende Luftschicht, LZR- außen Außenluft
   Lambda VIP 0,006 W/K zusätzliche Pavatexdämmung in der Blockholztafel
Variante VIPa1-06: geklebt
   Blockholztafel mit zwei Lagen VIP und jeweils 2mm Luftzwischenraum (LZR) in der Stoßfuge. VIP geklebt
   LZR- innen stehende Luftschicht, LZR- außen stehende Luftschicht
   Lambda VIP 0,006 W/K zusätzliche Pavatexdämmung in der Blockholztafel
Variante VIPb1-01: mechanisch befestigt
   Blockholztafel mit zwei Lagen VIP und jeweils 8mm Luftzwischenraum (LZR) in der Stoßfuge. VIP mechanisch befestigt
   LZR- innen Außenluft, LZR- außen Außenluft
   Lambda VIP 0,008 W/K keine zusätzliche Dämmung in der Blockholztafel
Variante VIPb1-02: mechanisch befestigt
   Blockholztafel mit zwei Lagen VIP und jeweils 8mm Luftzwischenraum (LZR) in der Stoßfuge. VIP mechanisch befestigt
   LZR- innen stehende Luftschicht, LZR- außen Außenluft
   Lambda VIP 0,008 W/K keine zusätzliche Dämmung in der Blockholztafel
Variante VIPb1-03: mechanisch befestigt
   Blockholztafel mit zwei Lagen VIP und jeweils 8mm Luftzwischenraum (LZR) in der Stoßfuge. VIP mechanisch befestigt
   LZR- innen stehende Luftschicht, LZR- außen stehende Luftschicht
   Lambda VIP 0,008 W/K keine zusätzliche Dämmung in der Blockholztafel
Variante VIPb1-04: mechanisch befestigt
   Blockholztafel mit zwei Lagen VIP und jeweils 8mm Luftzwischenraum (LZR) in der Stoßfuge. VIP mechanisch befestigt
   LZR- innen stehende Luftschicht, LZR- außen Außenluft
   Lambda VIP 0,008 W/K zusätzliche Pavatexdämmung in der Blockholztafel
Variante VIPb1-05: mechanisch befestigt
   Blockholztafel mit zwei Lagen VIP und jeweils 8mm Luftzwischenraum (LZR) in der Stoßfuge. VIP mechanisch befestigt
   LZR- innen stehende Luftschicht, LZR- außen stehende Luftschicht
   Lambda VIP 0,008 W/K zusätzliche Pavatexdämmung in der Blockholztafel
Variante VIPb1-06: mechanisch befestigt
   Blockholztafel mit zwei Lagen VIP und jeweils 8mm Luftzwischenraum (LZR) in der Stoßfuge. VIP mechanisch befestigt
   LZR- innen stehende Luftschicht, LZR- außen Außenluft
   Lambda VIP 0,006 W/K zusätzliche Pavatexdämmung in der Blockholztafel
Variante VIPb1-07: mechanisch befestigt
   Blockholztafel mit zwei Lagen VIP und jeweils 8mm Luftzwischenraum (LZR) in der Stoßfuge. VIP mechanisch befestigt
   LZR- innen stehende Luftschicht, LZR- außen stehende Luftschicht
   Lambda VIP 0,006 W/K zusätzliche Pavatexdämmung in der Blockholztafel

Die bauphysikalischen Untersuchungen haben ergeben, dass bei einem konkreten Ausführungsbeispiel eines Wandbauteiles, bestehend aus einer 1,5 m² großen Blockholztafel mit innen liegender Holzweichfaserdämmung und zwei Lagen VIP ä 25mm mechanisch befestigt mit 8mm Luftzwischenraum in der Stoßfuge (stehende Luftschichten wurde durch Abkleben der Fuge mit Klebeband erzielt), der mittlere U-Wert bei 0,1082 W/m²K liegt. Die mechanische Befestigung erfolgte mit 10 Dübel pro m² Wandfläche aus Edelstahl und PVC.

Zum Vergleich wurde ein ähnlicher zweiter Wandaufbau gewählt. Diesmal erfolgte die Befestigung mittels Kleber, also annähernd wärmebrückenfrei, zusätzlich wurde der Luftzwischenraum auf 2mm zwischen den einzelnen Platten reduziert.
Wurden die Luftzwischenräume abgeklebt, gleich dem Referenzwandaufbau, so stellte sich ein mittlerer U-Wert von 0,1034 W/m²K ein. Dies stellt in der Praxis eine Verbesserung um lediglich 5% gegenüber dem erzieltem hohem Niveau des ersten Wandaufbaus - der vorteilhaften mechanischen Befestigung mit Dübelsystem - dar.
Klebt man jedoch die Fugen beim zweiten Wandaufbau nicht ab, verschlechtert (!) sich der mittlere U-Wert auf 0,1928 W/m²K. Dies entspricht einer Verschlechterung von ca. 46% gegenüber der ersten, mechanisch befestigten Variante.
Aus diesen Betrachtungen heraus erkennt man die Bedeutung der stehenden Luftschichten, gerade im Zusammenhang mit Hochleistungswärmedämmstoffen.

## Patentansprüche

1. Verfahren zur Befestigung von Hochleistungswärmedämmplatten, insbesondere Vakuumisolationspaneele, an einer Bauteiloberfläche mit Hilfe von Dübeln, **dadurch gekennzeichnet, dass** eine Schicht Hochleistungswärmedämmplatten (2) durch Fugen (3) voneinander beabstandet auf der Bauteiloberfläche (1) aufgebracht werden, wobei die Fugen (3) breiter sind als der Durchmesser des Schaftes der Dübeln (7), dass die Fugen (3) luftdicht verschlossen werden und dass Befestigungsmittel (8) die Schicht aus Hochleistungswärmedämmplatten (2) im Bereich der Fugen (3) durchsetzen und in die in die Bauoberfläche (1) eingebrachten Dübeln (7) eingreifen.

2. Verfahren nach Anspruch 1, **dadurch gekennzeichnet, dass** nach dem Aufbringen der ersten Schicht Hochleistungswärmedämmplatten (2) und dem luftdicht Verschließen der Fugen (3) eine zweite Schicht Hochleistungswärmedämmplatten (4) durch Fugen (5) voneinander beabstandet auf die erste Schicht Hochleistungswärmedämmplatten (2) aufgebracht wird, wobei die Fugen (5) der zweiten Schicht gegenüber den Fugen (3) der ersten Schicht versetzt angeordnet werden, und ebenfalls breiter sind als der Durchmesser des Schaftes der Dübeln (7), und dass die Fugen (5) der zweiten Schicht ebenfalls verschlossen werden und dass an Kreuzungspunkten der Fugen (3) der ersten Schicht mit den Fugen (5) der zweiten Schicht die Befestigungsmittel (8) die Schichten aus Hochleistungswärmedämmplatten (2, 4) durchsetzen und in die in die Bauoberfläche (1) eingebrachten Dübeln (7) eingreifen.

3. Verfahren nach Anspruch 1 oder 2, **dadurch gekennzeichnet, dass** unter oder über einer Schicht aus Hochleistungswärmedämmplatten (2, 4) eine Schicht konventionellen Wärmedämmstoffs vorgesehen wird.

4. Verfahren nach einem der vorhergehenden Ansprüche, **dadurch gekennzeichnet, dass** die Hochleistungswärmedämmplatten (2, 4) der ersten und/oder der zweiten Schicht provisorisch aufgeklebt werden, bis sie durch die Verbindung der Befestigungsmittel (8) mit den Dübeln (7) gehalten werden.

5. Verfahren nach einem der vorhergehenden Ansprüche, **dadurch gekennzeichnet, dass** die Fugen (3, 5) zumindest teilweise durch Klebeband (9, 10) verschlossen werden.

6. Verfahren nach einem der vorhergehenden Ansprüche, **dadurch gekennzeichnet, dass** die Fugen (3, 5) zumindest teilweise mit wärmedämmendem Material ausgefüllt oder abgedichtet werden.

7. Verfahren nach einem der vorhergehenden Ansprüche, **dadurch gekennzeichnet, dass** die Dübeln (7) nach Aufbringen der ersten Schicht von Hochleistungswärmedämmplatten (2) in die Bauoberfläche (1) eingebracht werden und sich mit vorzugsweise tellerförmigen Erweiterungen an ihren äußeren Enden an den Außenflächen der Hochleistungswärmedämmplatten (2) der ersten Schicht abstützen.

8. Verfahren nach einem der Ansprüche 2 bis 7, **dadurch gekennzeichnet, dass** nach Aufbringen der zweiten Schicht von Hochleistungswärmedämmplatten (4) Befestigungsmittel (8) mit vorzugsweise tellerförmige Erweiterungen an ihren äußeren Enden in die Dübeln (7) eingebracht werden, wobei sich die Erweiterungen an den Außenflächen der Hochleistungswärmedämmplatten (4) der zweiten Schicht abstützen.

9. Verfahren nach einem der vorhergehenden Ansprüche, **dadurch gekennzeichnet, dass** in den Befestigungsmitteln (8) Haltevorrichtungen verankert werden, die eine weitere Schicht Hochleistungswärmedämmplatten oder Fassadenelemente halten.

10. Wärmedämmung aus Hochleistungswärmedämmplatten, insbesondere Vakuumisolationspaneele, für Bauteiloberflächen, **dadurch gekennzeichnet, dass** die Wärmedämmung aus einer Schicht Hochleistungswärmedämmplatten (2) besteht, die durch verschlossene Fugen (3) voneinander beabstandet sind und dass Befestigungsmittel (8) die Schicht aus Hochleistungswärmedämmplatten (2) im Bereich der Fugen (3) durchsetzen und in, in die Bauteiloberfläche (1) eingebrachte Dübeln (7), eingreifen, deren Schaftdurchmesser geringer ist als die Fugenbreite.

11. Wärmedämmung nach Anspruch 10, **dadurch gekennzeichnet, dass** die Wärmedämmung aus mindestens zwei Schichten Hochleistungswärmedämmplatten (2, 4) besteht, wobei die Hochleistungswärmedämmplatten (2, 4) in jeder Schicht durch verschlossene Fugen (3, 5) voneinander beabstandet und die Fugen (5) der zweiten Schicht gegenüber den Fugen (3) der ersten Schicht versetzt angeordnet sind, und dass an Kreuzungspunkten der Fugen (3) der ersten Schicht mit den Fugen (5) der zweiten Schicht die Befestigungsmittel (8) die Schichten aus Hochleistungswärmedämmplatten (2, 4) durchsetzen und in die, in die Bauteiloberfläche (1) eingebrachten Dübeln (7) eingreifen, deren Schaftdurchmesser geringer ist als die Fugenbreite.

12. Wärmedämmung nach Anspruch 10 oder 11, **dadurch gekennzeichnet, dass** unter oder über einer Schicht aus Hochleistungswärmedämmplatten (2, 4) eine Schicht konventionellen Wärmedämmstoffs vorgesehen ist.

13. Wärmedämmung nach einem der Ansprüche 10 bis 12, **dadurch gekennzeichnet, dass** zwischen der Bauteiloberfläche (1) und der ersten Schicht Hochleistungswärmedämmplatten (2) und/oder zwischen der ersten und zweiten Schicht Hochleistungswärmedämmplatten (2, 4) Klebemittel zur provisorischen Befestigung vorgesehen sind.

14. Wärmedämmung nach einem der Ansprüche 10 bis 13, **dadurch gekennzeichnet, dass** die Fugen (3, 5) zumindest teilweise durch Klebeband (9, 10) verschlossen sind.

15. Wärmedämmung nach einem der Ansprüche 10 bis 14, **dadurch gekennzeichnet, dass** die Fugen (3, 5) zumindest teilweise mit wärmedämmendem Material ausgefüllt oder abgedichtet sind.

16. Wärmedämmung nach einem der Ansprüche 10 bis 15, **dadurch gekennzeichnet, dass** die in die Bauoberfläche (1) eingebrachten Dübeln (7) vorzugsweise tellerförmige Erweiterungen an ihren äußeren Enden aufweisen, die sich an den Außenflächen der Hochleistungswärmedämmplatten (2) der ersten Schicht abstützen.

17. Wärmedämmung nach einem der Ansprüche 11 bis 16, **dadurch gekennzeichnet, dass** die in die Dübeln (7) eingreifenden Befestigungsmittel (8) vorzugsweise tellerförmige Erweiterungen an ihren äußeren Enden aufweisen, die sich an den Außenflächen der Hochleistungswärmedämmplatten (4) der zweiten Schicht abstützen.

18. Wärmedämmung nach einem der Ansprüche 10 bis 17, **dadurch gekennzeichnet, dass** die Befestigungsmitteln (8) Aufnahmeeinrichtungen für Haltevorrichtungen zum Halten einer weiteren Schicht Hochleistungswärmedämmplatten oder von Fassadenelementen aufweisen.

## Claims

1. Method of attaching high performance thermal insulation sheets, particularly vacuum insulation panels, to a surface of a component by means of dowels, **characterised in that** a layer of high performance thermal insulation sheets (2), separated from one another by joints (3), is applied to the surface (1) of the component, the joints (3) being wider than the diameter of the shank of the dowels (7), **in that** the joints (3) are sealed off in airtight manner and that fixing means (8) pass through the layer of high performance thermal insulation sheets (2) in the region of the joints (3) and engage in the dowels (7) inserted into the component surface (1).

2. Method according to claim 1, **characterised in that** after the first layer of high performance thermal insulation sheets (2) has been applied and the joints (3) have been closed off in airtight manner a second layer of high performance thermal insulation sheets (4) separated from one another by joints (5) is applied to the first layer of high performance thermal insulation sheets (2), the joints (5) of the second layer being offset relative to the joints (3) of the first layer, and are also wider than the diameter of the shank of the dowels (7), and **in that** the joints (5) of the second layer are also closed off and that, at points of intersection of the joints (3) of the first layer with the joints (5) of the second layer, the fixing means (8) pass through the layers of high performance thermal insulation sheets (2, 4) and engage in the dowels (7) introduced into the component surface (1).

3. Method according to claim 1 or 2, **characterised in that** a layer of conventional thermal insulation material is provided below or above a layer of high performance thermal insulation sheets (2, 4).

4. Method according to one of the preceding claims, **characterised in that** the high performance thermal insulation sheets (2, 4) of the first and/or second layer are temporarily stuck on until they are secured by the connection of the fixing means (8) to the dowels (7).

5. Method according to one of the preceding claims, **characterised in that** the joints (3, 5) are at least partially closed off by adhesive tape (9, 10).

6. Method according to one of the preceding claims, **characterised in that** the joints (3, 5) are at least partially filled or sealed with thermal insulating material.

7. Method according to one of the preceding claims, **characterised in that** after the first layer of high performance thermal insulation sheets (2) has been applied the dowels are introduced into the surface (1) and are supported with preferably plate-shaped widened portions at their outer ends on the outer surfaces of the high performance thermal insulation sheets (2) of the first layer.

8. Method according to one of claims 2 to 7, **characterised in that** after the second layer of high performance thermal insulating plates (4) has been applied fixing means (8) with preferably plate-shaped widened portions at their outer ends are introduced into the dowels (7), the widened portions being supported on the outer surfaces of the high performance thermal insulating plates (4) of the second layer.

9. Method according to one of the preceding claims, **characterised in that** holding devices which hold an additional layer of high performance thermal insulating plates or facing elements are anchored in the fixing means (8).

10. Heat insulation comprising high performance thermal insulation sheets, particularly vacuum insulation panels, for the surfaces of components, **characterised in that** the thermal insulation consists of a layer of high performance thermal insulation sheets (2) which are spaced from one another by closed joints (3) and that fixing means (8) pass through the layer of high performance thermal insulation sheets (2) in the region of the joints (3) and engage in dowels (7) introduced into the component surface (1), the shank diameter of which is less than the width of the joint.

11. Heat insulation according to claim 10, **characterised in that** the thermal insulation consists of at least two layers of high performance thermal insulation sheets (2, 4), the high performance thermal insulation sheets (2, 4) in each layer being spaced from one another by closed joints (3, 5) and the joints (5) of the second layer being offset relative to the joints (3) of the first layer, and **in that** at points of intersection of the joints (3) of the first layer with the joints (5) of the second layer the fixing means (8) pass through the layers of high performance thermal insulation sheets (2, 4) and engage in the dowels (7) introduced into the component surface (1), the shank diameter of which is less than the width of the joint.

12. Heat insulation according to claim 10 or 11, **characterised in that** a layer of conventional thermal insulation material is provided below or above a layer of high performance thermal insulation sheets (2, 4).

13. Heat insulation according to one of claims 10 to 12, **characterised in that** adhesive means for temporary fixing are provided between the component surface (1) and the first layer of high performance thermal insulation sheets (2) and/or between the first and second layers of high performance thermal insulation sheets (2, 4).

14. Heat insulation according to one of claims 10 to 13, **characterised in that** the joints (3, 5) are at least partially closed off by adhesive tape (9, 10).

15. Heat insulation according to one of claims 10 to 14, **characterised in that** the joints (3, 5) are at least partially filled or sealed with thermal insulating material.

16. Heat insulation according to one of claims 10 to 15, **characterised in that** the dowels (7) inserted in the component surface (1) have preferably plate-shaped widened portions at their outer ends, which are supported on the outer surfaces of the high performance thermal insulation sheets (2) of the first layer.

17. Heat insulation according to one of claims 11 to 16, **characterised in that** the fixing means (8) engaging in the dowels (7) have preferably plate-shaped widened portions at their outer ends which are supported on the outer surfaces of the high performance thermal insulation sheets (4) of the second layer.

18. Heat insulation according to one of claims 10 to 17, **characterised in that** the fixing means (8) comprise receiving means for holding devices for holding an additional layer of high performance thermal insulation sheets or facing elements,

## Revendications

1. Procédé de fixation de panneaux calorifuges à hautes performances, notamment de panneaux d'isolation sous vide, à une surface d'élément de construction à l'aide de chevilles, **caractérisé en ce que** des panneaux calorifuges (2) à hautes performances d'une couche sont montées à distance l'un de l'autre sur la surface d'élément de construction (1) par le biais de jointures (3), la largeur des jointures (3) étant supérieure au diamètre de la tige des chevilles (7), **en ce que** les jointures (3) sont fermées de façon étanche à l'air et **en ce que** des moyens de fixation (8) traversent la couche de panneaux calorifuges à hautes performances (2) dans la région des jointures (3) et s'engagent dans des chevilles (7) insérées dans la surface de construction (1).

2. Procédé selon la revendication 1, **caractérisé en ce que**, après le montage de la première couche de panneaux calorifuges à hautes performances (2) et après la fermeture étanche à l'air des jointures (3), une deuxième couche de panneaux calorifuges à hautes performances (4) est montée sur la première couche de panneaux calorifuges à hautes performances (2) à distance l'une de l'autre par le biais de jointures (5), les jointures (5) de la deuxième couche étant disposées en étant décalées par rapport aux jointures (3) de la première couche, et leur largeur étant également supérieure au diamètre de la tige des chevilles (7), **en ce que** les jointures (5) de la deuxième couche sont également fermées, et **en ce que** les moyens de fixation (8) traversent les couche de panneaux calorifuges à hautes performances (2, 4) en des points de croisement des jointures (3) de la première couche avec les jointures (5) de la deuxième couches et s'engagent dans les chevilles (7) insérées dans la surface d'élément de construction (1).

3. Procédé selon la revendication 1 ou 2, **caractérisé en ce qu'**une couche de matériau calorifuge classique est prévue au-dessous ou au-dessus d'une couche de panneaux calorifuges à hautes performances (2, 4).

4. Procédé selon l'une des revendications précédentes, **caractérisé en ce que** les panneaux calorifuges à hautes performances (2, 4) de la première couche et/ou de la deuxième couche sont provisoirement collés jusqu'à ce qu'ils soit maintenus par la liaison des moyens de fixation (8) aux chevilles (7).

5. Procédé selon l'une des revendications précédentes, **caractérisé en ce que** les jointures (3, 5) sont fermées au moins partiellement par une bande adhésive (9, 10).

6. Procédé selon l'une des revendications précédentes, **caractérisé en ce que** les jointures (3, 5) sont remplies ou rendues étanches au moins partiellement avec du matériau calorifuge.

7. Procédé selon l'une des revendications précédentes, **caractérisé en ce que** les chevilles (7) sont introduites dans la surface de construction (1) après montage de la première couche de panneaux calorifuges à hautes performances (2) et s'appuient par des élargissements, avantageusement en forme de plaque, situés à leur extrémité extérieure, contre les surfaces extérieures des panneaux calorifuges à hautes performances (2) de la première couche.

8. Procédé selon l'une des revendications 2 à 7, **caractérisé en ce que**, après montage de la deuxième couche de panneaux calorifuges à hautes performances (4), des moyens de fixation (8) comportant des élargissements, avantageusement en forme de plaques, situés à leur extrémité extérieure, sont insérés dans les chevilles (7), les élargissements s'appuyant contre les surfaces extérieures des panneaux calorifuges à hautes performances (4) de la deuxième couche.

9. Procédé selon l'une des revendications précédentes, **caractérisé en ce que** des dispositifs de retenue, qui maintiennent une autre couche de panneaux calorifuges à hautes performances ou des éléments de façade, sont ancrés dans les moyens de fixation (8).

10. Calorifugeage par panneaux calorifuges à hautes performances, notamment par panneaux d'isolation sous vide, pour surfaces d'élément de construction, **caractérisé en ce que** le calorifugeage est constitué d'une couche de panneaux calorifuges à hautes performances (2) qui sont espacés l'un de l'autre par des jointures fermées (3), et **en ce que** des moyens de fixation, (8) traversent la couche de panneaux calorifuges à hautes performances (2) dans la région des jointures (3) et s'engagent dans des chevilles (7) qui sont insérées dans la surface d'élément de construction (1) et ont une tige de diamètre qui est inférieur à la largeur des jointures.

11. Calorifugeage selon la revendication 10, **caractérisé en ce que** le calorifugeage est constitué d'au moins deux couches de panneaux calorifuges à hautes performances (2, 4), les panneaux calorifuges à hautes performances (2, 4) étant espacés l'un de l'autre dans chaque couche par des jointures fermées (3, 5) et les jointures (5) de la deuxième couche étant disposées en étant décalées par rapport aux jointures (3) de la première couche, et **en ce que** les moyens de fixation (8) traversent les couches de panneaux calorifuges à hautes performances (2, 4) en des points de croisement des jointures (3) de la première couche avec les jointures (5) de la deuxième couche et pénètrent dans les chevilles (7) qui sont insérées dans la surface d'élément de construction (1) et ont une tige de diamètre inférieur à la largeur des jointures.

12. Calorifugeage selon la revendication 10 ou 11, **caractérisé en ce qu'**une couche de matériau calorifuge classique est prévue au-dessous ou au-dessus d'une couche de panneaux calorifuges à hautes performances (2, 4).

13. Calorifugeage selon l'une des revendications 10 à 12, **caractérisé en ce qu'**un adhésif de fixation provisoire est prévu entre la surface d'élément de construction (1) et la première couche de panneaux calorifuges à hautes performances (2) et/ou entre les première et deuxième couches de panneaux calorifuges à hautes performances (2, 4).

14. Calorifugeage selon l'une des revendications 10 à 13, **caractérisé en ce que** les jointures (3, 5) sont fermées au moins partiellement par une bande adhésive (9, 10).

15. Calorifugeage selon l'une des revendications 10 à 14, **caractérisé en ce que** les jointures (3, 5) sont remplies ou rendues étanches au moins partiellement par du matériau calorifuge.

16. Calorifugeage selon l'une des revendications 10 à 15, **caractérisé en ce que** les chevilles (7), introduites dans la surface de construction (1), comportent à leur extrémité extérieure des élargissements, avantageusement en forme de plaque, qui s'appuient contre les surfaces extérieures des panneaux calorifuges à hautes performances (2) de la première couche.

17. Calorifugeage selon l'une des revendications 11 à 16, **caractérisé en ce que** les moyens de fixation (8), insérés dans les chevilles (7), comportent à leur extrémité extérieure des élargissements, avantageusement en forme de plaque, qui s'appuient contre les surfaces extérieures des panneaux calorifuges à hautes performances (4) de la deuxième couche.

18. Calorifugeage selon l'une des revendications 10 à 17, **caractérisé en ce que** les moyens de fixation (8) comportent des dispositifs de réception de dispositifs de retenue destinés à maintenir une autre couche de panneaux calorifuges à hautes performances ou d'éléments de façade.
